# EUROPÄISCHE PATENTSCHRIFT

(11) **EP 2 142 822 B1**
(45) Veröffentlichungstag und Bekanntmachung des Hinweises auf die Patenterteilung: **25.08.2010**
(21) Anmeldenummer: 08748739.3
(22) Anmeldetag: 09.04.2008
(51) Int. Cl.: F16G 13/16

(54) **QUERSTEG UND GLIED EINER LEITUNGSFÜHRUNGSEINRICHTUNG MIT QUERSTEG**
TRANSVERSE WEB AND MEMBER OF A CABLE GUIDE DEVICE HAVING A TRANSVERSE WEB
ENTRETOISE TRANSVERSALE ET ORGANE D'UN DISPOSITIF DE GUIDAGE DE CONDUITE À ENTRETOISE TRANSVERSALE

(30) Priorität: 16.04.2007 DE 202007005566 U
(43) Veröffentlichungstag der Anmeldung: 13.01.2010
(73) Patentinhaber: igus GmbH, 51147 Köln (DE)
(72) Erfinder: HERMEY, Andreas, 53773 Hennef (DE); BLASE, Günter, 51429 Bergisch Gladbach (DE); BLASE, Frank, 51429 Bergisch Gladbach (DE); NEHRING, Harald, 53229 Bonn (DE)
(74) Vertreter: Lippert, Stachow & Partner
(86) Internationale Anmeldenummer: PCT/DE2008/000602
(87) Internationale Veröffentlichungsnummer: WO 2008/125084

(56) Entgegenhaltungen:
- DE-A1- 19 948 926
- DE-C1- 3 714 056
- DE-U1-202007 005 566
- JP-A- 3 079 838
- US-A1- 2007 071 544

## Beschreibung

Die Erfindung betrifft einen Quersteg zur Verbindung zweier Seitenteile eines Glieds einer Leitungsführungseinrichtung, wobei der Quersteg zumindest an einem seiner Enden mit dem dort zu verbindenden Seitenteil verriegelbar ist, wobei der Quersteg ein Betätigungsteil und ein Verriegelungsteil aufweist, das über das Betätigungsteil im Wesentlichen in Längsrichtung des Querstegs zu dem Ende hin, mit dem der Quersteg mit dem Seitenteil verbindbar ist, in eine Verriegelungsposition verschiebbar ist, in der der Quersteg mit dem Seitenteil verriegelbar ist und von dem genannten Ende weg in eine Entriegelungsposition verschiebbar ist, in der der Quersteg vom Seitenteil lösbar ist. Die Erfindung betrifft weiterhin ein Glied einer Leitungsführungseinrichtung, die aus mehreren gegeneinander verschwenkbaren Gliedern zusammensetzbar ist, wobei das Glied zwei gegenüberliegende Seitenteile und einen diese verbindenden Quersteg aufweist, der zumindest an einem seiner Enden mit dem dort zu verbindenden Seitenteil verriegelbar ist.

Aus dem Stand der Technik sind Querstege für Glieder einer Leitungsführungseinrichtung bekannt, die an den Seitenteilen durch Verrastung lösbar befestigbar sind. Bei größeren Beanspruchungen und höheren Leitungsgewichten ist es wünschenswert, die Querstege mit den Seitenteilen fest zu verbinden, so dass die Stabilität des Glieds erhöht wird. Da zu sind nicht lösbare Verbindungen, z. B. durch Verschraubung der Querstege an den Seitenteilen, bekannt. Weiterhin ist bekannt, durch Einstecken eines Riegels von außen in die Seitenteile die Querstege an den Seitenteilen zu verriegeln, wobei durch Entfernung der Riegel die Querstege von den Seitenteilen wieder lösbar sind.

Zum Öffnen der Kettenglieder, d. h. zum Entfernen der Riegel zwecks Abnahme der Querstege, muss jedoch eine in einer Führungsrinne angeordnete Leitungsführungseinrichtung aus der Führungsrinne herausgenommen werden, um seitlichen Zugang zu den Riegeln zu erhalten und diese nach außen herauszuziehen Weiterhin sind die Riegel verlierbare Teile, die nach dem Entriegeln der Querstege gesondert aufgehoben werden müssen.

In der DE 199 48 926 A1 wird ein Quersteg der eingangs genannten Art zur Verbindung zweier Seitenteile einer Leitungsführungseinrichtung offenbart. An zumindest einem Ende des Quersteges ist ein Betätigungselement vorgesehen, das in Längsrichtung des Quersteges verschiebbar und verrastbar ist, wobei das Verriegelungsteil unverlierbar an dem Quersteg angeordnet ist. Zur Verriegelung werden Verrastungselemente durch Verschiebung des Betätigungselementes in die Verriegelungsposition hinein verrastet, wobei, um eine stabile Verbindung mit dem zu verbindenden Seitenteiles herstellen zu können, die Verrastung entsprechend große Verrastkräfte erfordert und damit eines erhöhten Kraftaufwandes seitens des Benutzers bedarf.

In der US 2007/0071544 A1 wird ebenfalls ein Quersteg zur Verbindung zweier Seitenteile beschrieben, hier das Verriegelungsteil als einzelnes Bauteil mit dem Betätigungsteil von Außen endseitig in den Quersteg einsteckbar und über das als Zunge mit Rastnase ausgebildete Betätigungsteil als verrastbar ist, indem es mit Rastnase in eine Rastausnehmung am Quersteg einrastet.

In der DE 37 14 056 C1 wird vorgeschlagen, beidendseitig des Quersteges Steckteile durch Überschieben auf den Quersteg aufzustecken, die an einer Seite verschwenkbar an einem Seitenteil angelagert werden und an der anderen Seite mittels Verrastungsmitteln mit Rastfedern und Raststegen verrastbar sind. Die Raststege sind über Erweiterungen mittels unmittelbaren Gegendrückens gegen die Raststege wieder aus der Rastverbindung lösbar.

Die JP 03079838 A beschreibt einen Quersteg, der mit einem Ende verschwenkbar an einem Seitenteil angeordnet ist und mit dem anderen Ende an dem anderen Seitenteil mit Herabschwenken auf das andere Seitenteil verrastet.

Der vorliegenden Erfindung liegt die Aufgabe zugrunde, einen Quersteg der eingangs genannten Art und ein Glied einer Leitungsführungseinrichtung mit einem solchen Quersteg bereitzustellen, wobei der Quersteg auf stabile Weise mit dem zu verbindenden Seitenteil verriegelbar ist und keine verlierbaren Teile für die Verriegelung benötigt werden.

Die Aufgabe wird erfindungsgemäß dadurch gelöst, dass bei einem Quersteg der eingangs genannten Art das Verriegelungsteil über einen Kniehebel mit dem Betätigungsteil verbunden ist und das Betätigungsteil verschwenkbar in einer Lagerung im oder am Quersteg gelagert ist.

Demit sind das Betätigungsteil und das Verriegelungsteil im oder am Quersteg unverlierbar angeordnet. Das Betätigungsteil und das damit zusammenwirkende Verriegelungsteil müssen nicht in der Entriegelungsposition als verlierbare Teile besonders aufgehoben werden.

In einer bevorzugten Weiterführung der Erfindung ist das Verriegelungsteil im oder am Quersteg in dessen Längsrichtung geführt.

Das Verriegelungsteil weist bevorzugt einen zu dem Ende des Querstegs, mit dem er mit dem Seitenteil verbunden werden soll, weisenden Vorsprung auf. Der Vorsprung ist so ausgebildet, dass er in eine an der nach innen weisenden Seite des Seitenteils in Längsrichtung des Querstegs angeordnete Nut eingreift und dadurch die Verriegelung bewirkt. Der Vorsprung kann plattenförmig, z. B. in Gestalt eines flachen Quaders, ausgebildet sein.

Das Betätigungsteil und/oder das Verriegelungsteil können in der Verriegelungsposition und/oder in der Entriegelungsposition des Verriegelungsteiles lagefixierbar angeordnet sein. Durch ihre Lagefixierung kann der Gefahr wirksam begegnet werden, dass sich das Betätigungsteil und/oder das Verriegelungsteil unbeabsichtigt aus der Verriegelungsposition lösen und somit die Verbindungsfestigkeit zwischen Quersteg und Laschen zumindest mindern können. Ferner können hierdurch Betätigurigsteil und Hebelteil über den Steg verstehen und somit ein leichtes Verfahren der Leitungsvorrichtung beeinträchtigen. Bei einem unbeabsichtigten Lösen aus der Entriegelungsposition kann eine Montage des Quersteges erschwert werden.

Sollen beide gegenüberliegende Enden des Querstegs mit den gegenüberliegenden Seitenteilen eines Glieds verriegelbar sein, können zwei einzelne Betätigungsteile, die jeweils mit einem Verriegelungsteil an den Enden des Querstegs zusammenwirken, oder auch ein Betätigungsteil, das mit beiden. Verriegelungsteilen zusammenwirkt, verwendet werden.

Bei einer vorteilhaften weiteren Ausgestaltung .des erfindungsgemäßen Querstegs ist das Betätigungsteil in der Verriegelungsposition des Verriegelungsteils in eine Ausnehmung des Querstegs einschwenkbar und in der Entriegelungsposition des Verriegelungsteils aus der Ausnehmung heraus schwenkbar.

Bevorzugt ist die Ausnehmung an der Seite des Querstegs angeordnet, die nach seiner Verbindung mit den Seitenteilen des Glieds einer Leitungsführungseinrichtung nach außen weist.

Zweckmäßigerweise ist das Betätigungsteil an seinem aus der Ausnehmung heraus schwenkbaren Ende in der Verriegelungsposition des Verriegelungsteils in einem Abstand zum gegenüberliegenden Rand der Ausnehmung angeordnet, der das Eingreifen eines Werkzeugs zum Anheben des heraus schwenkbaren Endes des Betätigungsteils ermöglicht.

Das Betätigungsteil kann auch an seinem aus der Ausnehmung heraus schwenkbaren Ende oder an seiner in der Ausnehmung freiliegenden Oberfläche eine Nut aufweisen, die das Eingreifen eines Werkzeugs zum Anheben des heraus schwenkbaren Endes des Betätigungsteils ermöglicht.

Vorzugsweise ist das Betätigungsteil in der Verriegelungsposition des Verriegelungsteils im oder am Quersteg verrastbar, so dass es nicht unbeabsichtigt aus der Verriegelungsposition herausbewegt werden kann oder die Verriegelungsposition sich durch Erschütterungen des Glieds der Leitungsführungseinrichtung löst.

Um eine möglichst glatte Oberfläche im Bereich der Ausnehmung zu erhalten, ist es zweckmäßig, dass das Betätigungsteil in der Verriegelungsposition des Verriegelungsteils mit seiner aus der Ausnehmung weisenden Oberfläche fluchtend zur umgebenden Oberfläche des Querstegs angeordnet ist.

In einer bevorzugten Weiterbildung der Erfindung ist das Betätigungsteil zur verschwenkbaren Anordnung am oder im Quersteg mit einem Scharnierteil versehen, das drehbar im oder am Quersteg gelagert ist. Das Scharnierteil kann zwei gegenüberliegende Scharnierzapfen umfassen, die in die Scharnierlagerung im oder am Quersteg eingreifen.

Zweckmäßigerweise ist die Scharnierlagerung im oder am Quersteg so ausgebildet, dass das Scharnierteil, z. B. die Scharnierzapfen, im oder am Quersteg, im genannten Beispiel in der Lageraufnahme, einrastbar sind.

Der Kniehebel kann ein Hebelteil aufweisen, das einem ersten Ende.über ein erstes Scharnier mit dem Betätigungsteil und an einem dem ersten gegenüberliegenden, zweiten Ende über ein zweites Scharnier mit dem Verriegelungsteil verbunden ist.

Die Scharniere sind bevorzugt als Filmscharniere ausgebildet. Somit können das Betätigungsteil, das Hebelteil und das Verriegelungsteil als ein Kunststoffteil einstückig, z. B. durch Spritzguss, hergestellt werden.

In einer zweckmäßigen Weiterbildung weisen das Betätigungsteil, das Hebelteil und das Verriegelungsteil Anschläge auf, die das Verschwenken des Hebelteils gegenüber dem Betätigungsteil und dem Verriegelungsteil in die jeweils im Wesentlichen gestreckte Position begrenzen.

In einer bevorzugten weiteren Ausbildung weist das Betätigungsteil an seinem der verschwenkbaren Lagerung im oder am Quersteg gegenüberliegenden Ende ein Laschenteil auf, das sich über das Hebelteil erstreckt. Das Laschenteil vergrößert die Hebellänge des Betätigungsteils des Kniehebels, so dass die Verriegelung mit relativ geringer manueller Kraft bewerkstelligt werden kann.

Vorteilhafterweise steht das Laschenteil an einem Bereich größerer Materialstärke des Betätigungsteils vor.

Der Kniehebel kann dann folgendermaßen gestaltet werden. Das erste Scharnier verbindet die vom Laschenteil wegweisende Kante des Bereichs größerer Materialstärke des Betätigungsteils und die ebenfalls vom Laschenteil wegweisende Kante des Hebelteils, während das zweite Filmscharnier die dem Laschenteil zugewandten, gegenüberliegenden Kanten des Hebelteils und des Verriegelungsteils verbindet.

Bei dieser Ausführung bilden der an das Laschenteil angrenzende Abschnitt des Bereichs größere Stärke und der dem Laschenteil zugewandte Kantenbereich des Hebelteils die Anschläge zur Begrenzung der Verschwenkung des Betätigungsteils relativ zum Hebelteil in die im Wesentlichen gestreckte Position. Die beiden gegenüberliegenden, sich vom Laschenteil weg erstreckenden Kantenbereiche des Hebelteils und Verriegelungsteils bilden die Anschläge für die Begrenzung der Verschwenkung des Hebelteils relativ zum Verriegelungsteil in die im Wesentlichen gestreckte Position.

Die gegenüber dem Laschenteil größere Materialstärke des Betätigungsteils kann etwa der Stärke des Hebelteils entsprechen, so dass in der gestreckten Position das Betätigungsteil und das Hebelteil einen Bereich etwa gleicher Stärke aufweisen. Beim Bewegen des Kniehebels in die gestreckte Position legen sich das Laschenteil und das Hebelteil aufeinander und können somit in einem Raum gleicher Tiefe im Quersteg angeordnet werden.

In einer anderen Ausführung kann zur Verriegelung eines Querstegs an seinen beiden gegenüberliegenden Enden auch ein Betätigungsteil verwendet werden, das mit beiden Verriegelungsteilen zusammenwirkt. Hierzu kann das einzige Betätigungsteil aus zwei durch ein Scharnier miteinander verbundenen Betätigungsabschnitten bestehen, die in der Entriegelungsposition der beiden Verriegelungsteile in einem Winkel zueinander angeordnet sind. Um die Verriegelungsteile in ihre Verriegelungsposition zu verschieben, können die beiden, z. B. durch ein Filmscharnier, miteinander verbundenen Betätigungsabschnitte in die gestreckte Position gedrückt werden.

Ein einziges die beiden Verriegelungsteile in Form einer Brücke verbindendes Betätigungsteil kann insbesondere bei kurzen Querstegen vorteilhaft sein.

Vorzugsweise sind das Betätigungsteil und/oder das Verriegelungsteil an einer Seitenwand der Ausnehmung verrastbar. Hierzu können das Betätigungsteil und/oder das Verriegelungsteil jeweils einen seitlich überstehenden ersten Vorsprung aufweisen, der in der Verriegelungsposition und/oder in der Entriegelungsposition des Verriegelungsteiles jeweils in eine in der Seitenwand vorgesehene Ausnehmung einrastet. Vorzugsweise längserstrecken sich Vorsprung und Ausnehmung bezüglich der Seitenwand der Ausnehmung quer zu der Bewegung des Verriegelungsteiles zwischen Entriegelungsposition und Verriegelungsposition.

Der erste Vorsprung dient in einer bevorzugten Ausbildung des Quersteges als Anschlag zur Lagefixierung des in der Ausnehmung geführten Verriegelungsteiles in der Entriegelungsposition. Hierzu kann der erste Rastvorsprung in der Entriegelungsposition innenseitig an der Ausnehmung anschlagen, durch die das Betätigungsteil von der Entriegelungsposition in die Verriegelungsposition des Verriegelungsteiles eingeschwenkt werden kann.

In einer Weiterbildung des Quersteges ist das Betätigungsteil in der Verriegelungsposition des Verriegelungsteiles mit dem Verriegelungsteil und/oder mit dem Hebelteil festlegbar, vorzugsweise verrastbar. Dadurch können diese in der vorgesehenen Entriegelungsposition gehalten werden, welches die Montage des Steges an ein Glied.erleichtert.

Es können hierzu zwei Hakenelemente vorgesehen sein, die verrastend ineinander greifen. Beispielsweise kann das Betätigungsteil einen zweiten Vorsprung aufweisen, der in der Verriegelungsposition verrastend in eine vorzugsweise an dem Hebelteil vorgesehene Rastausnehmung eingreift. Wegen der relativ zueinander verschwenkbaren Lagerung von Betätigungsteil und Hebelteil kann sich der zweite Rastvorsprung hakenförmig mit einer Komponente zur Lagerung des Betätigungsteils 7 hin erstrecken. Ähnlich kann die Rastausnehmung eine Hinterschneidung aufweisen, die der zweite Vorsprung in der Verriegelungsposition des Verriegelungsteiles verrastend hintergreift.

Somit kann der zweite Vorsprung in die Rastausnehmung einschnappen und/oder mit derselben verhaken. Dieses kann unter leichter elastischer Verformung des zweiten Vorsprunges sowie der Hinterschneidung erfolgen. Ein Verschwenken des Betätigungsteiles aus der Verriegelungsposition des Verriegelungsteiles heraus kann ebenfalls gegen einen Verformungswiderstand unter einer vorzugsweise elastischen oder zumindest weitgehend elastischen Verformung erfolgen. Der Verformungswiderstand bildet somit den Widerstand gegen dieses Verschwenken. Um die Verformung gezielt endseitig des zweiten Vorsprunges einzuleiten, kann der zweite Vorsprung zu seinem freien Ende hin sich verjüngend ausgebildet sein.

Der zweite Vorsprung und die zugeordnete Rastöffnung können sich ebenfalls quer zur Längsrichtung des Quersteges längserstrecken.

Insbesondere wenn das Betätigungsteil in der Verriegelungsposition des Verriegelungsteiles fluchtend zur umgebenden Oberfläche des Steges angeordnet ist, kann es sich als schwierig erweisen, das Betätigungsteil aus der Verriegelungsposition zu lösen. Dieses kann dadurch verstärkt werden, dass, wie weiter unten detaillierter beschrieben, das Betätigungsteil bzw. das Verriegelungsteil in der Verriegelungsposition des Verriegelungsteiles festlegbar, insbesondere verrastbar sind. Daher kann vorgesehen sein, dass das Betätigungsteil an seinem an der Ausnehmung heraus schwenkbaren Ende mit dem Rand der Ausnehmung eine seitliche Öffnung zum Durchgriff des Werkzeuges begrenzt.

Um, zum Beispiel im Falle der o.a. Ausbildung des Betätigungsteiles als Kniehebel mit einem Hebelteil, zu verhindern, dass das Werkzeug mit Durchgriff durch die Öffnung das Hebelteil untergreift, kann vorgesehen sein das Hebelteil an einer in Verriegelungsposition der Öffnung zugewandten Seite eine Aufnahme zur Abstützung des durch die Öffnung durchgreifenden Werkzeuges aufweist. Diese Aufnahme kann als Nut ausgebildet sein, in der sich das Werkzeug abstützt. Vorzugsweise ist die Öffnung schlitzartig ausgebildet und kann somit auf einen üblichen Schraubendreher abgestimmt sein. Es kann vorgesehen sein, dass die Öffnung beispielsweise durch eine filmartige oder über ein Filmscharnier mit dem Quersteg verbundenen Verschluss, insbesondere Klappe, verschließbar ist, um ein Eindringen von Partikeln durch die Öffnung zu verhindern.

Bei einer Ausführungsalternative kann das Betätigungsteil als Schieber ausgebildet sein, der am oder im Quersteg in dessen Längsrichtung geführt ist und mit dem Verriegelungsteil insbesondere starr verbunden sein kann.

Der Quersteg kann dazu ein über dem Betätigungsteil angeordnetes Fenster aufweisen, durch das das Betätigungsteil und damit das Verriegelungsteil manuell oder mit einem Werkzeug in die Verriegelungsposition des Verriegelungsteils und aus dieser hinaus in die Entriegelungsposition verschiebbar sind.

Vorzugsweise weist das Betätigungsteil eine vom Verriegelungsteil weg weisende Rastzunge auf, die in der Verriegelungsposition des Verriegelungsteiles in das Fenster einschnappbar ist.

Bevorzugt weist das Betätigungsteil einen Anschlag auf, der durch Anliegen an eine Anschlagfläche im oder am Quersteg die Verschiebung des Betätigungsteils aus der Verriegelungsposition in die Entriegelungsposition begrenzt.

In einer bevorzugten Ausführung der vorstehenden Alternative weist das Betätigungsteil eine Nut auf, die das Eingreifen eines Werkzeugs zur Verschiebung ermöglicht.

Die eingangs genannte Aufgabe wird weiterhin durch ein Glied einer Leitungsführungseinrichtung, die aus mehreren gegeneinander verschwenkbaren Gliedern zusammensetzbar ist, gelöst, wobei das Glied zwei gegenüberliegende Seitenteile und einen diese verbindenden Quersteg aufweist, wie er vorstehend beschrieben ist.

Insbesondere kann das mit dem Quersteg durch Verriegelung zu verbindende Seitenteil einen nach innen, d. h. zum gegenüberliegenden Seitenteil, gerichteten Ansatz und das zu verbindende Ende des Querstegs eine nach innen, d. h. zum Inneren des Glieds, offene Aussparung aufweisen, in die der Ansatz eingreift, wobei die zum gegenüberliegenden Seitenteil weisende Stirnseite des Ansatzes eine Ausnehmung aufweist, in die das Verriegelungsteil eingreift.

Das mit dem betreffenden Seitenteil zu verbindende Ende des Querstegs kann auf den Ansatz so aufgelegt werden, dass dieser in die Aussparung eingreift und das zu verriegelnde Ende des Querstegs exakt an der Innenseite des Seitenteils positioniert ist. Ober das Betätigungsteil kann dann das Verriegelungsteil in seine Verriegelungsposition in die Ausnehmung des Ansatzes hineingeschoben werden.

Andere Varianten sind ebenfalls möglich, wobei das zu verriegelnde Ende des Querstegs in einer Ausnehmung des betreffenden Seitenteils eingeführt und darin positioniert werden kann, so dass an der Stirnseite des in die Ausnehmung eingreifenden Endes des Querstegs ein Materialbereich des Seitenteils angeordnet ist, in den das Verriegelungsteil eingreifen kann. Die Ausnehmung im Seitenteil ist zweckmäßigerweise nach innen, d. h. zum Inneren des Gliedes geöffnet, so dass der Quersteg dort eingreifen kann, und auch senkrecht zur Längsrichtung des Seitenteils offen, so dass der Quersteg in der entgegengesetzten Richtung in die Ausnehmung eingesetzt werden kann. An der der Stirnseite des zu verriegelnden Endes des Querstegs gegenüberliegenden, nach innen gerichteten Seitenwand des Seitenteils ist dann eine Ausnehmung ausgebildet, in die das Verriegelungsteil eingreifen kann.

In einer bevorzugten Ausgestaltung ist der Quersteg als plattenförmiger Steg mit kleineren und größeren jeweils gegenüberliegenden Seitenflächen ausgebildet und der nach innen vorstehende Ansatz ebenfalls plattenförmig ausgebildet, wobei die stirnseitige Ausnehmung im Ansatz im Wesentlichen die Form eines flachen Quaders aufweist.

Weiterhin kann der Ansatz an seiner größeren, nach außen weisenden Seite eine Nase aufweisen, wobei der Quersteg im Bereich der Aussparung mit einem Durchbruch zur Aufnahme der Nase versehen ist.

Der durch den Ansatz mit daran angeformter Nase und der Ausnehmung sowie dem Durchbruch im Quersteg erzeugte Formschluss ermöglicht eine besonders stabile Befestigung des zu verriegelnden Querstegs am Seitenteil.

Zwei Ausführungsbeispiele der vorliegenden Erfindung werden im Folgenden anhand der Zeichnung näher beschrieben.

### In der Zeichnung zeigen:

- Fig. 1: eine seitliche Ansicht eines Glieds,
- Fig. 2: einen Querschnitt längs der Linie A-A in Fig.1,
- Fig. 3: eine vergrößerte Ansicht des Bereichs Y in Fig. 2,
- Fig. 4: eine vergrößerte Ansicht des Bereichs Z in Fig. 2,
- Fig. 5: eine perspektivische Ansicht des halb aufgeschnittenen Glieds gemäß Fig. 1,
- Fig. 6: eine perspektivische Ansicht des gesamten Glieds,
- Fig. 7: eine vergrößerte Ansicht des in Fig. 6 gezeigten Querstegs
- Fig. 8: eine Seitenansicht der Verriegelungsvorrichtung in der Entriegelungsposition,
- Fig. 9: eine perspektivische Ansicht der Verriegelungsvorrichtung in der Entriegelungsposition,
- Fig. 10: eine seitliche Ansicht der Verriegelungsvorrichtung in der Verriegelungsposition,
- Fig. 11: eine perspektivische Ansicht der Verriegelungsvorrichtung in der Verriegelungsposition,
- Fig. 12: eine Draufsicht auf den Steg in einer weiteren Ausbildungsform mit der Verriegelungsvorrichtung in der Entriegelungsposition
- Fig. 13a: eine Längsschnittansicht gemäß dem Schnittverlauf XIII-XIII in Figur 12,
- Fig. 13b: eine perspektivische Längsschnittansicht gemäß dem Schnittverlauf XIII-XIII in Figur 12,
- Fig. 14a: einen Ausschnitt XIV gemäß Figur 13a,
- Fig. 14b: einen Ausschnitt XV gemäß Figur 13b,
- Fig. 15: eine Draufsicht auf den Steg gemäß Figur 12 mit der Verriegelungsvorrichtung in der Verriegelungsposition,
- Fig. 16: eine Längsschnittansicht des Steges gemäß dem Schnittverlauf XVI-XVI in Figur 15,
- Fig. 17: einen Ausschnitt XVII gemäß Figur 16,
- Fig. 18: eine Seitenansicht einer Ausführungsform der Verriegelungsvorrichtung in der Entriegelungsposition gemäß Figur 15 und
- Fig. 19: eine perspektivische Ansicht der Verriegelungsvorrichtung gemäß Figur 18.

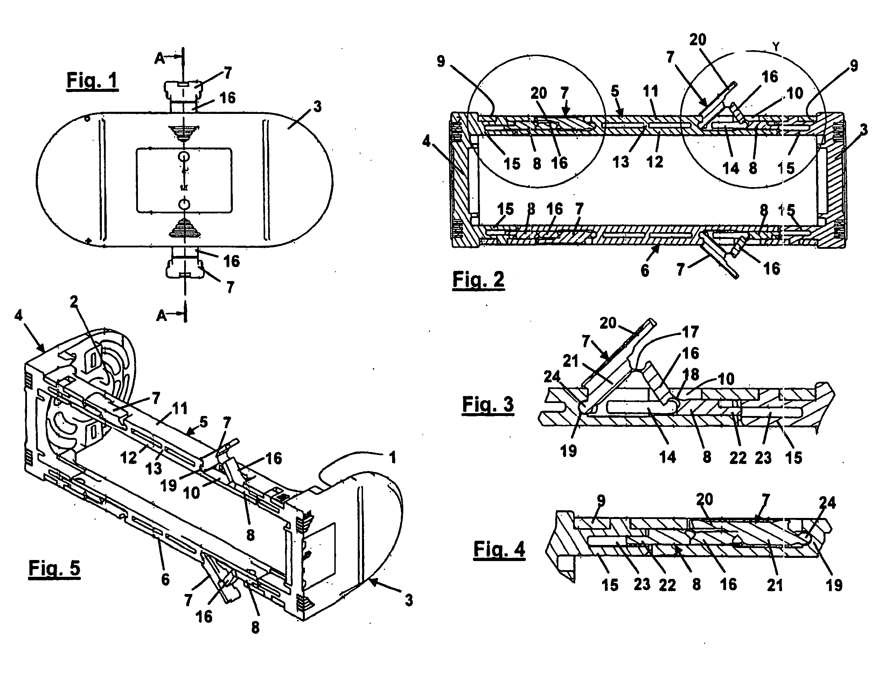

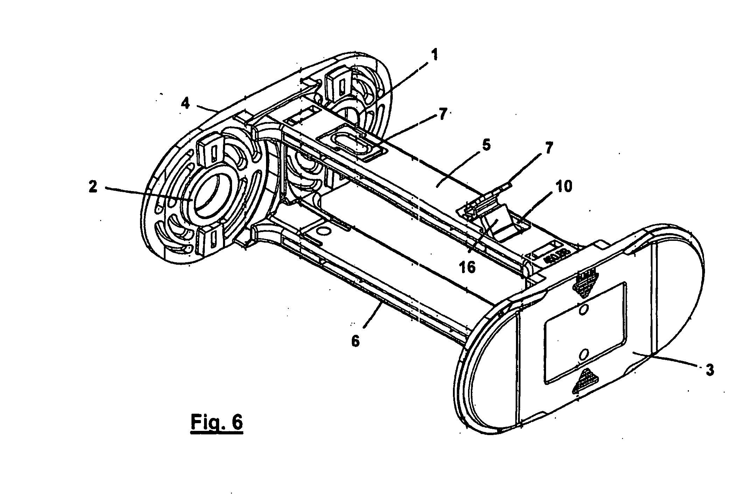

In den Figuren 1, 2, 5 und 6 ist ein Glied einer Leitungsführungseinrichtung dargestellt, wobei mehrere solcher Glieder miteinander gelenkig verbunden sind und die Leitungsführungseinrichtung bilden. Bei dem in den Figuren gezeigten Ausführungsbeispiel handelt es sich um eine als Energieführungskette gestaltete Leitungsführungseinrichtung, deren Glieder Gelenkbereiche 1 und 2 zur gelenkigen Verbindung mit benachbarten Gliedern aufweisen.

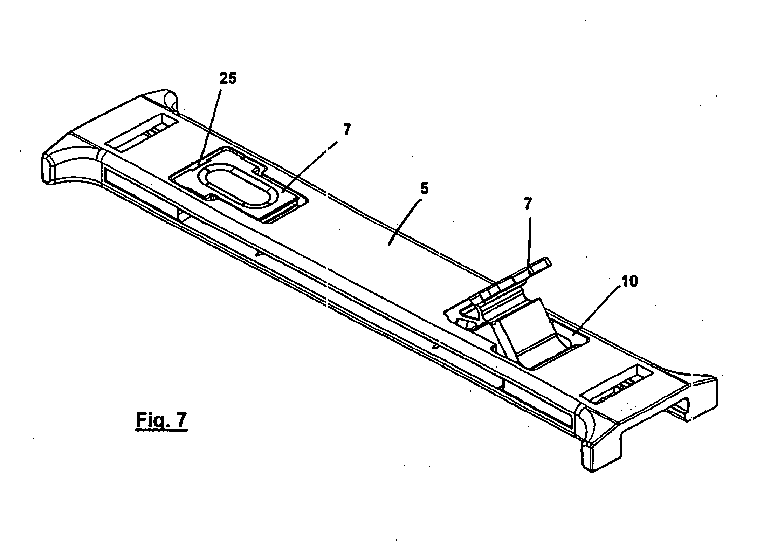

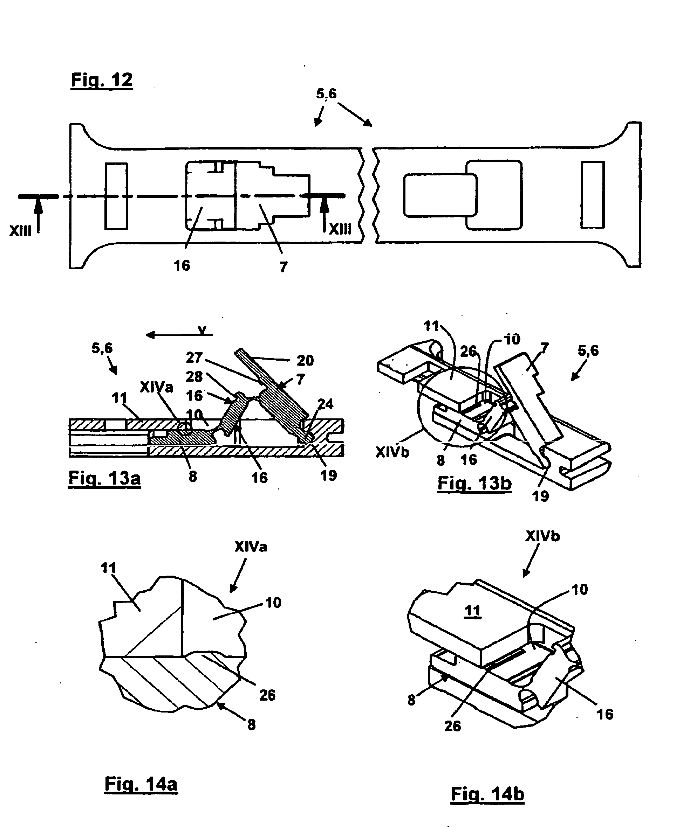

Jedes Glied der Energieführungskette besteht aus zwei Seitenteilen 3 und 4 sowie einem die Seitenteile 3 und 4 verbindenden oberen Quersteg 5 und unteren Quersteg 6. Wie im Folgenden noch näher beschrieben werden wird, sind die Querstege 5 und 6 jeweils durch eine Verriegelungsvorrichtung mit den Seitenteilen 3 und 4 verbunden. Wie weiter unten ausgeführt, unterscheiden sich hinsichtlich der differenzierten Ausgestaltung der Verriegelungsvorrichtung die in den Figuren 2 bis 11 dargestellten Querstege 5, 6 von den in den Figuren 12 bis 17 gezeigten Querstegen 5, 6.

Wie insbesondere in den Figuren 3 und 4 sowie 8 und 11 im Einzelnen dargestellt ist, umfasst die verriegelungsvorrichtung ein Betätigungsteil 7 und ein Verriegelungsteil 8, das über das Betätigungsteil 7 im Wesentlichen in Längsrichtung des betreffenden Querstegs 5 bzw. 6 zu dessen Ende 9 hin in eine Verriegelungsposition verschiebbar ist. In der Verriegelungsposition des Verriegelungsteiles ist der Quersteg 5 bzw. 6 mit dem Seitenteil 3 bzw. 4 verriegelt. Ferner ist er von seinem Ende 9 weg in eine Entriegelungsposition verschiebbar, in der der Quersteg 5 bzw. 6 vom Seitenteil 3 bzw. 4 lösbar ist.

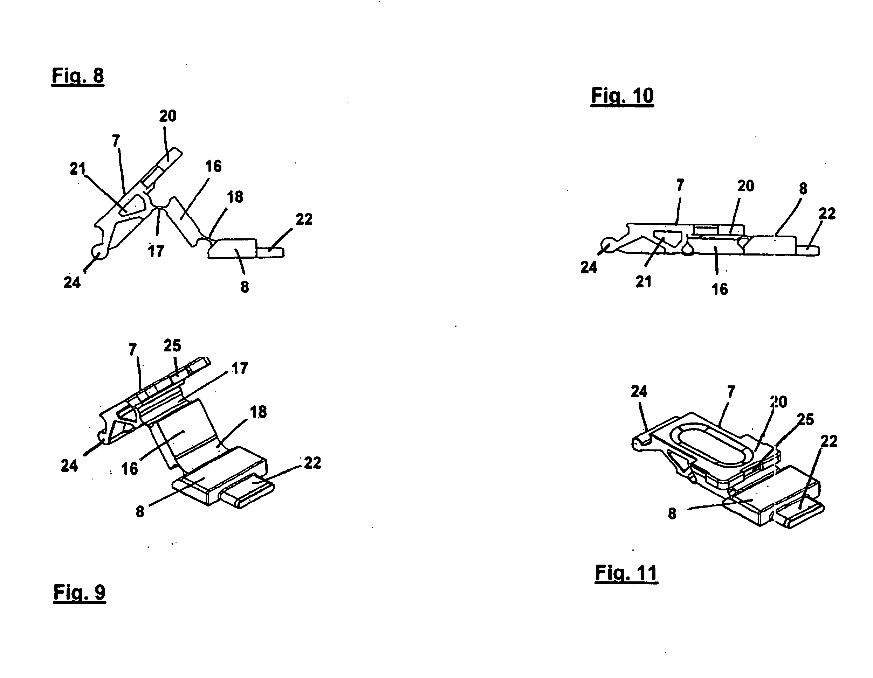

Wie insbesondere in den Figuren 8 bis 11 gezeigt ist, ist das Verriegelungsteil 8 über eine Kniehebelkonstruktion mit dem Betätigungsteil 7 verbunden, wobei das Betätigungsteil 7, wie insbesondere aus den Figuren 3 und 4 hervorgeht, verschwenkbar im Quersteg 5 bzw. 6 gelagert ist.

Das Betätigungsteil 7 ist in der in den Figuren 4 sowie 10 und 11 gezeigten Verriegelungsposition in eine Ausnehmung 10 des Querstegs 5 bzw. 6 eingeschwenkt, während es in der in den Figuren 3 sowie 8 und 9 gezeigten Entriegelungsposition aus der Ausnehmung 10 herausgeschwenkt ist.

Die Querstege 5 und 6 bestehen, wie insbesondere aus den Figuren 2 und 5 hervorgeht, aus zwei langgestreckten parallelen Platten 11 und 12, die durch quer verlaufende Stege 13 miteinander verbunden sind. An ihren Enden sind die Querstege 5 und 6 mit stirnseitig und nach innen, d.h. zum Inneren des Glieds, offenen Ausnehmungen 14 versehen, in die zum jeweils gegenüberliegenden Seitenteil gerichtete Ansätze 15 an den betreffenden Seitenteilen 3 und 4 eingreifen.

Die Ausnehmung 14, die die Ansätze 15 aufnehmen, setzen sich zwischen den Platten 11 und 12 von den Ansätzen 15 über einen bestimmten Bereich in Längsrichtung der Querstege 5 und 6 fort in Richtung der Mitte der Querstege 5 und 6. Dieser Bereich nimmt, wie insbesondere in den Figuren 3 und 4 gezeigt ist, das Verriegelungsteil 8 auf und führt dieses im Quersteg zwischen seitlichen Begrenzungswänden.

Die als Kniehebel ausgebildete Verriegelungsvorrichtung weist, wie genauer aus den Figuren 3 und 4 sowie 8 bis 11 hervorgeht, ein plattenförmiges Hebelteil 16 auf, dass an einem ersten Ende über ein erstes Scharnier 17 mit dem Betätigungsteil 7 und an seinem dem ersten gegenüberliegenden, zweiten Ende über ein zweites Scharnier 18 mit dem Verriegelungsteil 8 verbunden ist. Die Scharniere 17 und 18 sind als Filmscharniere ausgebildet.

Wie weiterhin aus dem genannten Figuren hervorgeht, weist das Betätigungsteil 7 an seinem der verschwenkbaren Lagerung 19 gegenüberliegenden Ende ein Laschenteil 20 auf, das sich über das Hebelteil 16 erstreckt. Das Laschenteil steht an einem Bereich 21 größerer Materialstärke des Betätigungsteils 7 vor. Das erste Scharnier 17 verbindet die vom Laschenteil 20 des Betätigungsteils 7 weg weisenden gegenüberliegenden Kantenbereiche des Bereichs 21 größerer Materialstärke und des Hebelteils 16, während das zweite Scharnier 18 die dem Laschenteil zugewandten gegenüberliegenden Kantenbereiche des Hebelteils 16 und des Verriegelungsteils 8 verbindet.

Wie aus den Figuren 3 und 4 sowie 8 bis 11 ersichtlich ist, entspricht die gegenüber dem Laschenteil 20 größere Materialstärke des Betätigungsteils 7 etwa der Stärke des Hebelteils 16, so dass das Betätigungsteil 7 und das Hebelteil 16 in der gestreckten Position einen Bereich etwa gleicher Stärke aufweisen. Beim Bewegen des Kniehebels in die gestreckte Position legen sich somit das Laschenteil 20 und das Hebelteil 16 aufeinander und können durch die Ausnehmung 10 im Quersteg 5 bzw. 6 aufgenommen werden. Das Betätigungsteil 7 und das daran angeformte Laschenteil 20 bilden eine fluchtende, ebene Oberseite, die in der durch die Figuren 4 sowie 10 und 11 dargestellten Verriegelungsposition die Ausnehmung 10 fluchtend mit der die Ausnehmung 10 umgebenden Oberseite des Querstegs 5 bzw. 6 abdeckt.

Die Stärke des Hebelteils 16 entspricht weiterhin der Stärke des Verriegelungsteils 8, so dass beide Teile in der Verlängerung der stirnseitigen Ausnehmung 14 des Querstegs 5 bzw. 6 geführt werden können.

Wie weiterhin aus den Figuren 3 und 4 sowie 8 bis 11 hervorgeht, weist das Verriegelungsteil 8 an seiner vom Betätigungsteil 7 weg weisenden Stirnseite einen Vorsprung 22 auf, der in eine entsprechende stirnseitige Ausnehmung 23 des nach innen weisenden Ansatzes 15 des Seitenteils 3 bzw. 4 eingreift und den Quersteg 5 bzw. 6 mit dem Seitenteil 3 bzw. 4 verriegelt.

Die das Betätigungsteil 7, Hebelteil 16 und Verriegelungsteil 8 aufweisende Verriegelungsvorrichtung ist als einstückiges Spritzgussteil in einer Anordnung hergestellt, wie sie aus den Figuren 3 sowie 8 und 9 hervorgeht.

Die Verriegelungsvorrichtung wird mit dem Verriegelungsteil 8 in die Ausnehmung 10 im Quersteg 5 bzw. 6 eingesetzt. Zwecks Führung des Verriegelungsteils 8 zwischen den inneren Seitenwänden des Querstegs 5 bzw. 6 ist es plattenförmig mit einer entsprechenden Breite ausgebildet. Der stirnseitig an das Verriegelungsteil 8 angeformte Vorsprung 22 ist an die stirnseitige Ausnehmung 23 im Ansatz 15 des betreffenden Seitenteils 3 bzw. 4 angepasst.

Weiterhin wird das Betätigungsteil zur verschwenkbaren Anordnung im Quersteg 5 bzw. 6 mit einem Scharnierteil 24 in die Lagerung 19, wie in Figur 3 gezeigt, eingesetzt. Die als etwa halbkreisförmige Nut ausgebildete Lagerung 19 begrenzt die Verlängerung der Ausnehmung 14 vom Ende 9 des Querstegs 5 bzw. 6 weg, so dass sie ein Widerlager für den Kniehebel der Verriegelungsvorrichtung bildet.

Bei der in die Ausnehmung 10 und die Ausnehmung 14 eingesetzten Position bilden das Betätigungsteil 7 und das Hebelteil 16 einen Winkel miteinander, der es erlaubt, durch Druck auf die Außenseite des Laschenteils 20 das Verriegelungsteil 8 in Richtung des Endes 9 des Querstegs 5 bzw. 6 zu verschieben. Die Öffnung der Ausnehmung 10 nach außen erstreckt sich soweit in Richtung auf das Ende 9 des Querstegs 5 bzw. 6 hin, daß beim Verschieben des Verriegelungsteils 8 sich das Hebelteil 16 in die Ausnehmung 10 hinein bewegen kann, indem der Winkel zwischen ihm und dem Betätigungsteil 7 sich durch Druck auf das Laschenteil 20 vergrößert und schließlich 180° beträgt. Die Oberseite des Betätigungsteils 7 und Laschenteils 20 ist in der gestreckten 180°-Position fluchtend zu der die Ausnehmung 10 umgebenden Oberseite des Querstegs 5 bzw. 6 angeordnet.

Das Scharnierteil 24 des Betätigungsteils 7 umfasst zwei gegenüberliegende Scharnierzapfen, die in die Lagerung 19 im Quersteg 5 bzw. 6 eingreifen. Die Lagerung 19 ist weiterhin so ausgebildet, dass die Scharnierzapfen in der Lagerung 19 einrastbar sind.

Wie insbesondere in Figur 11 gezeigt ist, weist das Betätigungsteil 7 an seinem an der Ausnehmung 10 heraus schwenkbaren und vom Scharnierteil 24 weg weisenden Ende eine Nut 25 auf, die das Eingreifen eines Werkzeugs, z.B. eines kleinen Schraubendrehers, zum Anheben des herausschwenkbaren Endes des Laschenteils 20 ermöglicht.

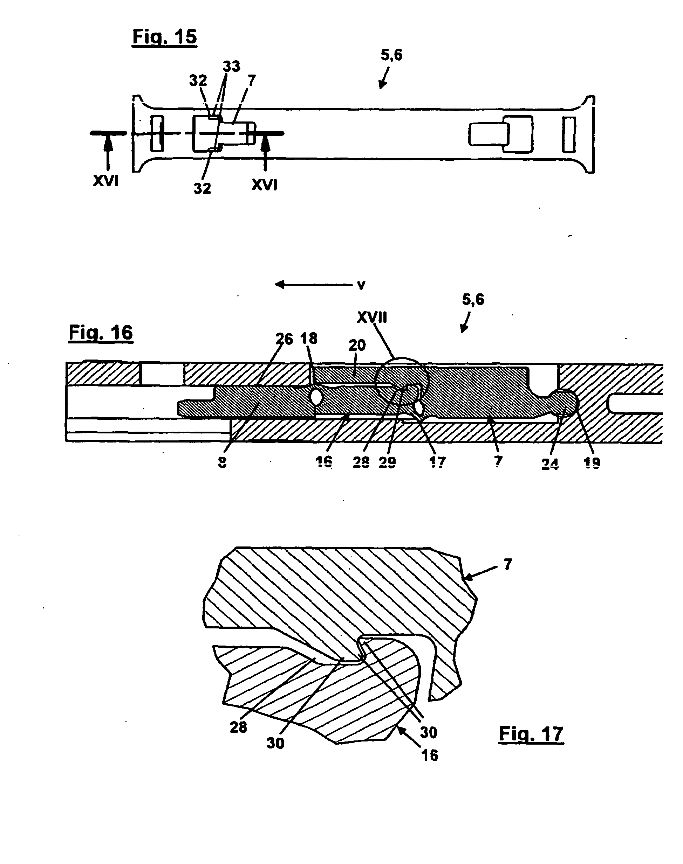

In den Figuren 12 bis 17 wird eine weitere Ausführungsform des Quersteges 5, 6 gezeigt. Diese unterscheidet sich insbesondere hinsichtlich der Ausgestaltung der Verriegelungsvorrichtung von der in Figuren 2 bis 11 dargestellten Ausführungsform des Quersteges 5, 6. Hier sind das Betätigungsteil 7 und das Verriegelungsteil 8 in der Verriegelungsposition und in der Entriegelungsposition des Verriegelungsteils 8 lagefixierbar. Betätigungsteil 7 und Verriegelungsteil 8 sind, bis auf das in Figur 12 rechts wiedergegebene Betätigungsteil 7 und Verriegelungsteil 8, in den Figuren 12 bis 14 in der Entriegelungsposition dargestellt. In den Figuren 15 bis 17 sind Betätigungsteil 7 und Verriegelungsteil 8 in der Verriegelungsposition gezeigt.

Insbesondere weist das Verriegelungsteil 8 zu seiner Lagefixierung in der Entriegelungsposition einen seitlich überstehenden ersten Vorsprung 26 auf. Dieser schlägt in der Entriegelungsposition in einer Verriegelungsrichtung v von der Entriegelungsposition in die Verriegelungsposition innenseitig an der Ausnehmung 10 des Querstegs 5, 6 an, durch die das Betätigungsteil 7 verschwenkbar ist. Zur Bewegung des Verriegelungsteiles aus der Entriegelungsposition in die Verriegelungsposition hinein muss zunächst ein Widerstand überwunden werden, der dadurch aufgebaut wird, dass der erste Vorsprung 26 unter elastischer Verformung des ersten Vorsprungs 26 und/oder der Ausnehmung 14 in dieselbe hineinverschoben werden muss. Der erste Vorsprung 26 längserstreckt sich senkrecht zur Längserstreckung des Quersteges 6, 7 bzw. senkrecht zur Verriegelungsrichtung v und liegt über seine gesamte Länge seitlich an der Ausnehmung 10 an. Ferner ist der erste Vorsprung 26 einstückig an dem Verriegelungsteil 8 angeformt, d.h. hier spritzgegossen.

Der Lagefixierung des Verriegelungsteiles 8 in der Verriegelungsposition liegt in diesem Ausführungsbeispiel des Quersteges 6, 7 ein anderer, in den Figuren 15 bis 17 verdeutlichter Mechanismus zugrunde: Es sind Betätigungsteil 7 und Hebelteil 16 in der Verriegelungsposition des Verriegelungsteiles 8 miteinander verrastbar. Wie insbesondere in den Figuren 15 und 16 ersichtlich, weist das Betätigungsteil 7 an seinem Laschenteil 20, mit dem es das Hebelteil 16 in der Verriegelungsposition überlappt, einen zweiten Vorsprung 27 auf. Der zweite Vorsprung 27 greift in der Verriegelungsposition in eine an dem Hebelteil 16 vorgesehene Rastausnehmung 28 ein.

Der zweite Vorsprung 27 ist hakenförmigen mit einer Formkomponente zur Lagerung 19 hin ausgebildet. Die Rastausnehmung 28 umfasst eine Hinterschneidung 29, die der zweite Vorsprung 27 in der Verriegelungsposition des Verriegelungsteiles 8 hintergreift. Damit sind zweiter Vorsprung 27 und Rastausnehmung 28 in der Verriegelungsposition ineinander verhakt. In sofern bilden der zweite Vorsprung 27 und die Rastausnehmung 28 mit der Hinterschneidung 29 jeweils Haken aus. Zum Lösen dieser Verrastung bzw. Verhakung müssen der zweite Vorsprung 27 und die Rastausnehmung 28, d.h. insbesondere das freie Ende 30 des Vorsprunges 27 und die Hinterschneidung 29, gegen einen Verformungswiderstand elastisch verformt, d.h. aufgeweitet werden. Der hakenförmige Vorsprung 27 verjüngt sich zu seinem freien Ende 30 hin. Desgleichen wird die Wandstärke der Hinterschneidung 29 zu ihrem freien Ende 30 hin verjüngt.

Der erste Vorsprung 26 ist in der Verriegelungsposition des Verriegelungsteiles 8 in Verriegelungsrichtung v in die Ausnehmung 14 geführt angeordnet und liegt unter elastischer Aufweitung der Ausnehmung 14 innenseitig an. Hierdurch wird die Kraft, die für die Bewegung des Verriegelungsteiles 8 aus der Verriegelungsposition heraus zu der Entriegelungsposition hin aufgewendet werden muss, und somit die Lagefixierung des Verriegelungsteiles 8 in der Verriegelungsposition des Verriegelungsteiles 8 weiter erhöht.

Wie deutlich der Figur 16 entnehmbar, liegen die Scharniere 17, 18 in der Verriegelungsposition jeweils an dem Steg 5,6 an und werden dadurch lagestabilisiert. Insbesondere liegt das erste Scharnier 17 innenseitig an der Platte 12 und das zweite Scharnir 18 an dem Laschenteil an.

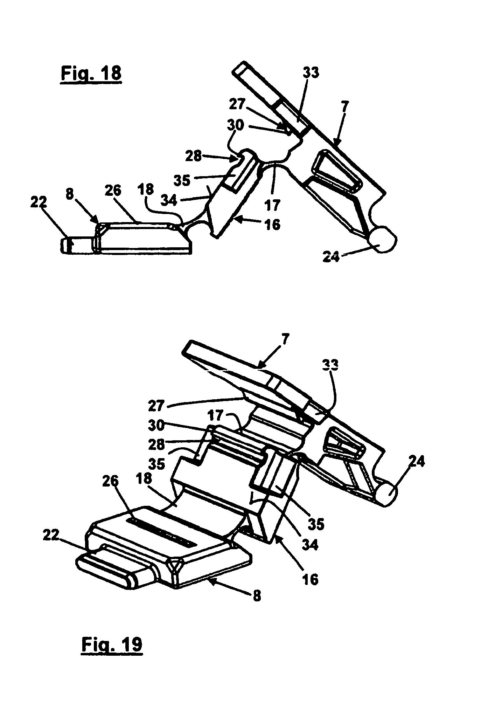

In den Figuren 18 und 19 wird die Verriegelungsvorrichtung mit Betätigungsteil 7, Verriegelungsteil 8 und Hebelteil 16 als Einzeldarstellung in einer Seitenansicht und in einer perspektivischen Draufsicht gezeigt. Wie beispielsweise in Figur 18 gezeigt, ist das Betätigungsteil in der Verriegelungsposition des Verriegelungsteiles 8 fluchtend zur Oberfläche des Quersteges 5, 6 angeordnet. Zum Entriegeln des Verriegelungsteiles 8 ist vorgesehen, dass das Betätigungsteil 7 an seinem verschwenkbaren Ende 31 mittels eines hier nicht dargestellten Werkzeuges aus der Ausnehmung 10 herausbewegt, d.h. hier herausgehebelt wird. Wie ferner Figur 15 entnehmbar, ist das Betätigungsteil 7 in zwei gegenüberliegenden Bereichen an seinem verschwenkbaren Ende 31 zum Teil so beabstandet zum Rand 32 der Ausnehmung 10 angeordnet, dass es mit demselben eine Öffnung 33 zum Durchgriff des Werkzeuges, begrenzt. Die Öffnung 33 ist hier schlitzartig gestaltet und damit zum Durchgriff beispielsweise eines üblichen Schraubendrehers geeignet.

Wie insbesondere in den Figuren 18 und 19 ersichtlich, ist an dem Hebelteil 16 an einer in Verriegelungsposition des Verriegelungsteils 8 der Öffnung 33 zugewandten Seite 34 eine Aufnahme 35 zur Abstützung des durch die Öffnung 33 durchgreifenden Werkzeuges vorgesehen. Hierdurch soll verhindert werden, dass sich das Werkzeug mit seinem Eingriff durch die Öffnung 33 an eventuell ungeeigneter Stelle abstützt oder sogar das Hebelteil 16 schädlich untergreift. Hierbei ist die Aufnahme 35 nutförmig ausgebildet, wobei sich das Werkzeug am Nutengrund abstützen kann und während des Aufhebelvorganges in der Aufnahme 35 geführt ist.

### Bezugzeichenliste

- 1: Gelenkbereich
- 2: Gelenkbereich
- 3: Seitenteil
- 4: Seitenteil
- 5: oberer Quersteg
- 6: unterer Quersteg
- 7: Betätigungsteil
- 8: Verriegelungsteil
- 9: Ende
- 10: Ausnehmung
- 11: Platte
- 12: Platte
- 13: Steg
- 14: Ausnehmung
- 15: Ansatz
- 16: Hebelteil
- 17: erstes Scharnier
- 18: zweites Scharnier
- 19: Lagerung
- 20: Laschenteil
- 21: Bereich
- 22: Vorsprung-
- 23: Ausnehmung
- 24: Scharnierteil
- 25: Nut
- 26: erster Vorsprung
- 27: zweiter Vorsprung
- 28: Rastausnehmung
- 29: Hinterschneidung
- 30: freies Ende
- 31: Ende
- 32: Rand
- 33: Öffnung
- 34: Seite
- 35: Aufnahme
- v: Verriegelungsrichtung

## Patentansprüche

1. Quersteg (5, 6) zur Verbindung zweier Seitenteile (3, 4) eines Glieds einer Leitungsführungseinrichtung, wobei der Quersteg (5, 6) zumindest an einem seiner Enden (9) mit dem dort zu verbindenden Seitenteil (5, 6) verriegelbar ist, wobei der Quersteg (5, 6) ein Betätigungsteil (7) und ein Verriegelungsteil (8) aufweist, das über das Betätigungsteil (7) im Wesentlichen in Längsrichtung des Querstegs (5, 6) zu dem Ende (9) hin, mit dem der Quersteg (5, 6) mit dem Seitenteil (3, 4) verbindbar ist, in eine Verriegelungsposition verschiebbar ist, in der der Quersteg (5, 6) mit dem Seitenteil (3, 4) verriegelbar ist und von dem genannten Ende (9) weg in eine Entriegelungsposition verschiebbar ist, in der der Quersteg (5, 6) vom Seitenteil (3, 4) lösbar ist, **dadurch gekennzeichnet, dass** das Verriegelungsteil (8) über einen Kniehebel mit dem Betätigungsteil (7) verbunden ist und das Betätigungsteil (7) verschwenkbar in einer Lagerung (19) im oder am Quersteg (5, 6) gelagert ist.

2. Quersteg (5, 6) nach Anspruch 1, **dadurch gekennzeichnet, dass** das Verriegelungsteil (8) im oder am Quersteg (5, 6) in dessen Längsrichtung geführt ist.

3. Quersteg (5, 6) nach Anspruch 1 oder 2, **dadurch gekennzeichnet, dass** das Verriegelungsteil (8) einen zum Ende des Querstegs (5, 6) weisenden Vorsprung (22) zum verriegelnden Eingriff in eine an der nach innen weisenden Seite des Seitenteils (3,4) in Längsrichtung des Querstegs (5, 6) angeordnete Nut (25) aufweist.

4. Quersteg (5, 6) nach einem der Ansprüche 1 bis 3, **dadurch gekennzeichnet, dass** das Betätigungsteil (7) und/oder das Verriegelungsteil (8) in der Verriegelungsposition und/oder Entriegelungsposition des Verriegelungsteiles (7) lagefixierbar sind.

5. Quersteg (5, 6) nach einem der Ansprüche 1 bis 4, **dadurch gekennzeichnet, dass** das Betätigungsteil (7) in der Verriegelungsposition des Verriegelungsteils (8) in eine Ausnehmung (10) des Querstegs (5, 6) einschwenkbar und in der Entriegelungsposition des Verriegelungsteils (8) aus der Ausnehmung (10) heraus schwenkbar ist.

6. Quersteg (5, 6) nach Anspruch 5 **dadurch gekennzeichnet, dass** das Betätigungsteil (7) an seinem aus der Ausnehmung (10) heraus schwenkbaren Ende in der Verriegelungsposition des Verriegelungsteils (8) in einem Abstand zum gegenüberliegenden Rand (32) der Ausnehmung (10) angeordnet ist, der das Eingreifen eines Werkzeugs zum Anheben des heraus schwenkbaren Endes ermöglicht.

7. Quersteg (5, 6) nach Anspruch 5 oder 6, **dadurch gekennzeichnet, dass** das Betätigungsteil (7) in der Verriegelungsposition des Verriegelungsteils (8) mit seiner aus der Ausnehmung (10) weisenden Oberfläche fluchtend zur umgebenden Oberfläche des Querstegs (5, 6) angeordnet ist.

8. Quersteg (5, 6) nach einem der Ansprüche 1 bis 7, **dadurch gekennzeichnet, dass** der Kniehebel ein Hebelteil (16) aufweist, das an einem ersten Ende über ein erstes Scharnier (17) mit dem Betätigungsteil (7) und an seinem dem ersten gegenüberliegenden, zweiten Ende über ein zweites Scharnierteil (18) mit dem Verriegelungsteil (8) verbunden ist.

9. Quersteg (5, 6) nach einem der Ansprüche 1 bis 8, **dadurch gekennzeichnet, dass** das Betätigungsteil (7) an seinem der verschwenkbaren Lagerung (19) gegenüberliegenden Ende ein Laschenteil (20) aufweist, das sich über das Hebelteil (16) erstreckt.

10. Quersteg (5, 6) nach einem der Ansprüche 5 bis 9, **dadurch gekennzeichnet, dass** das Verriegelungsteil (8) zu seiner Lagefixierung in der Entriegelungsposition einen seitlich überstehenden ersten Vorsprung (26) aufweist, der in der Entriegelungsposition innenseitig an der Ausnehmung (10) des Querstegs (5, 6) anschlägt.

11. Quersteg (5, 6) nach einem der Ansprüche 8 bis 10, **dadurch gekennzeichnet, dass** das Betätigungsteil (7) in der Verriegelungsposition mit dem Verriegelungsteil (8) oder mit dem Hebelteil (16) verrastbar ist.

12. Quersteg (5, 6) nach Anspruch 11, **dadurch gekennzeichnet, dass** das Betätigungsteil (7) einen zweiten Vorsprung (27) aufweist, der in der Verriegelungsposition verrastend an eine an dem Hebelteil (16) vorgesehenen Rastausnehmung (28) eingreift.

13. Quersteg (5, 6) nach die Ansprüche 6 und 8 und ins besondere einem der Ansprüche 9 bis 12, **dadurch gekennzeichnet, dass** das Betätigungsteil (7) an seinem an der Ausnehmung (10) heraus schwenkbaren Ende (31) mit dem Rand (32) der Ausnehmung (10) eine seitliche Öffnung (33) zum Durchgriff des Werkzeuges begrenzt und dass das Hebelteil (16) an einer in Verriegelungsposition des Verriegelungsteils (8) der Öffnung zugewandten Seite (34) eine Aufnahme (35) zur Abstützung des durch die Öffnung (33) durchgreifenden Werkzeuges aufweist.

14. Glied einer Leitungsführungseinrichtung, die aus mehreren gegeneinander verschwenkbaren Gliedern zusammensetzbar ist, wobei das Glied zwei gegenüberliegende Seitenteile (3, 4) und einen diesen verbindenden Quersteg (5, 6) nach einem Ansprüche 1 bis 13 aufweist.

15. Glied nach Anspruch 14, **dadurch gekennzeichnet, dass** das mit dem Quersteg (5, 6) durch Verriegelung zu verbindende Seitenteil (3, 4) einen nach innen gerichteten Ansatz (15) und das zu verbindende Ende (9) des Querstegs (5, 6) eine nach innen offene Aussparung (10) aufweist, in die der Ansatz (15) eingreift, wobei die zum gegenüberliegenden Seitenteil (6, 5) weisende Stirnseite des Ansatzes (15) eine Ausnehmung (23) aufweist, in die das Verriegelungsteil (8) eingreift.

## Claims

1. A transverse limb (5, 6) for connecting two side portions (3, 4) of a member of a line guide device, wherein the transverse limb (5, 6) is lockable at least at one of its ends (9) to the side portion (5, 6) to be connected there, wherein the transverse limb (5, 6) has an actuating portion (7) and a locking portion (8) which is displaceable by way of the actuating portion (7) substantially in the longitudinal direction of the transverse limb (5, 6) towards the end (9) with which the transverse limb (5, 6) can be connected to the side portion (3, 4), into a locking position in which the transverse limb (5, 6) is lockable to the side portion (3, 4), and is displaceable away from said end (9) into an unlocking position in which the transverse limb (5, 6) is releasable from the side portion (3, 4), **characterized in that** the locking portion (8) is connected by way of an elbow lever to the actuating portion (7) and the actuating portion (7) is supported pivotably in a mounting arrangement (19) in or on the transverse limb (5, 6).

2. A transverse limb (5, 6) as set forth in claim 1 **characterized in that** the locking portion (8) is guided in or on the transverse limb (5, 6) in the longitudinal direction thereof.

3. A transverse limb (5, 6) as set forth in claim 1 or claim 2 **characterized in that** the locking portion (8) has a projection (22) facing towards the end of the transverse limb (5, 6), which serves as a locking engagement with a groove (25) disposed at the inwardly facing side of the portion in the longitudinal direction of the transverse limb (5, 6).

4. A transverse limb (5, 6) as set forth in one of claims 1 through 3 **characterized in that** the actuating portion (7) and/or the locking portion (8) can be fixed in position in the locking position and/or in the unlocking position of the locking portion (7).

5. A transverse limb (5, 6) as set forth in one of claims 1 through 4 **characterized in that** the actuating portion (7) in the locking position of the locking portion (8) is pivotable into an opening (10) in the transverse limb (5, 6) and in the unlocking position of the locking portion (8) it is pivotable out of the opening (10).

6. A transverse limb (5, 6) as set forth in claim 5 **characterized in that** in the locking position of the locking portion (8), the actuating portion (7) at its end which is pivotable out of the opening (10) is arranged at a spacing relative to the oppositely disposed edge (32) of the opening (10), which permits the engagement of a tool for lifting the end which is pivotable out of same.

7. A transverse limb (5, 6) as set forth in claim 5 or claim 6 **characterized in that** in the locking position of the locking portion (8) the actuating portion (7) is arranged with its surface facing out of the opening (10) in aligned relationship with the surrounding surface of the transverse limb (5, 6).

8. A transverse limb (5, 6) as set forth in one of claims 1 through 7 **characterized in that** the elbow lever has a lever portion (16) which at its first end is connected by way of a first hinge (17) to the actuating portion (7) and at its second end opposite to the first end to the locking portion (8) by way of a second hinge portion (18).

9. A transverse limb (5, 6) as set forth in one of claims 1 through 8 **characterized in that** the actuating portion (7) at its end opposite to the pivotable mounting (19) has a tongue portion (20) which extends over the lever portion (16).

10. A transverse limb (5, 6) as set forth in one of claims 5 through 9 **characterized in that** the locking portion (8) for positional fixing thereof in the unlocking position has a laterally projecting first projection (26) which in the unlocking position bears at the inside against the opening (10) of the transverse limb (5, 6).

11. A transverse limb (5, 6) as set forth in one of claims 8 through 10 **characterized in that** the actuating portion (7) is latchable in the locking position with the locking portion (8) or with the lever portion (16).

12. A transverse limb (5, 6) as set forth in claim 11 **characterized in that** the actuating portion (7) has a second projection (27) which in the locking position engages latchingly into a latching opening (28) provided on the lever portion (16).

13. A transverse limb (5, 6) as set forth in claims 6 and 8 and in particular as set forth in one of claims 9 through 12 **characterized in that** at its end (31) which is pivotable out at the opening (10), the actuating portion (7) defines with the edge (32) of the opening (10) a lateral aperture (33) for the tool to pass therethrough and that the lever portion (16) at a side (34) which is towards the aperture in the locking position of the locking portion (8) has a receiving means (35) for supporting the tool which engages through the aperture (33).

14. A member of a line guide device which can be composed of a plurality of mutually pivotable members, wherein the member has two mutually opposite side portions (3, 4) and a transverse limb (5, 6) connecting them as set forth in one of claims 1 through 13.

15. A member as set forth in claim 15 **characterized in that** the side portion (3, 4) which is to be connected to the transverse limb (5, 6) by locking has an inwardly directed protrusion (15) and the end (9) to be connected of the transverse limb (5, 6) has an inwardly open opening (10) into which the protrusion (15) engages, wherein the end of the protrusion (15) which faces towards the opposite side portion (6, 5) has an opening (23) into which the locking portion (8) engages.

## Revendications

1. Entretoise transversale (5, 6) pour la connexion de deux pièces latérales (3, 4) d'un organe d'un dispositif de guidage de conduite, l'entretoise transversale (5, 6) étant verrouillable sur l'une de ses extrémités (9) avec la pièce latérale (5, 6) y à connecter, l'entretoise transversale (5, 6) comportant un élément d'actionnement (7) et un élément de verrouillage (8) qui peut être déplacé au moyen de l'élément d'actionnement en sens longitudinal de l'entretoise transversale (5, 6) vers l'extrémité par laquelle l'entretoise transversale (5, 6) peut être connectée avec la pièce latérale (3, 4) en une position de verrouillage dans laquelle l'entretoise transversale (5, 6) peut être verrouillée avec la pièce latérale (3, 4), et qui peut être déplacé de ladite extrémité (9) en une position de déverrouillage dans laquelle l'entretoise transversale (5, 6) peut être détachée de la pièce latérale (3, 4), **caractérisée en ce que** l'élément de verrouillage (8) est relié à l'élément d'actionnement (7) au moyen d'un genou et **en ce que** l'élément d'actionnement (7) est logé d'une manière pivotante dans un logement (19) dans ou sur l'entretoise transversale (5, 6).

2. Entretoise transversale (5, 6) selon la revendication 1, **caractérisée en ce que** l'élément de verrouillage (8) est guidée dans ou sur l'entretoise transversale en sa direction longitudinale.

3. Entretoise transversale (5, 6) selon la revendication 1 ou 2, **caractérisée en ce que** l'élément de verrouillage (8) comporte un épaulement (22) qui fait face à l'extrémité de l'entretoise transversale (5, 6) et qui sert à l'engagement verrouillant dans une rainure (25) arrangée en sens longitudinale de l'entretoise latérale (5, 6) sur le côté de la pièce latérale (3, 4) qui fait face à l'intérieur.

4. Entretoise transversale (5, 6) selon l'une des revendications 1 à 3, **caractérisée en ce que** l'élément d'actionnement (7) et/ou l'élément de verrouillage (8) peuvent être fixés en position dans la position de verrouillage et/ou déverrouillage de l'élément de verrouillage (7).

5. Entretoise transversale (5, 6) selon l'une des revendications 1 à 4, **caractérisée en ce que** l'élément d'actionnement (7) peut être pivoté dans un creux (10) de l'entretoise transversale (5, 6) en la position de verrouillage de l'élément de verrouillage (8) et hors du creux (10) en la position de déverrouillage de l'élément de verrouillage (8).

6. Entretoise transversale (5, 6) selon la revendication 5, **caractérisée en ce que**, en la position de verrouillage de l'élément de verrouillage (8), l'élément d'actionnement (7), sur son extrémité qui peut être pivotée hors du creux (10), est arrangé à une distance du bord opposé (32) du creux (10), ce qui permet l'engagement d'un outil pour soulever l'extrémité qui peut être pivotée dehors.

7. Entretoise transversale (5, 6) selon la revendication 5 ou 6, **caractérisée en ce que** l'élément d'actionnement (7), dans la position de verrouillage de l'élément de verrouillage (8), est arrangé avec sa surface montrant hors de l'exclusion (10) d'une manière alignée avec la surface ambiante de l'entretoise transversale (5, 6).

8. Entretoise transversale (5, 6) selon l'une des revendications 1 à 7, **caractérisée en ce que** le genou comporte un élément de levier (16) qui est relié sur sa première extrémité à l'élément d'actionnement (7) au moyen d'une charnière (17) et qui est relié sur sa deuxième extrémité opposée à sa première extrémité à l'élément de verrouillage (8) au moyen d'un deuxième élément de charnière (18).

9. Entretoise transversale (5, 6) selon l'une des revendications 1 à 8, **caractérisée en ce que** l'élément d'actionnement (7) comporte, à son extrémité opposée au logement pivotant (19), un élément de jumelle (20) s'étendant sur l'élément de levier (16).

10. Entretoise transversale (5, 6) selon l'une des revendications 5 à 9, **caractérisée en ce que** l'élément de verrouillage (8) comporte pour la fixation de sa position en la position de déverrouillage un premier épaulement (26) saillant latéralement qui fait butée sur la face interne du creux (10) de l'entretoise transversale (5, 6).

11. Entretoise transversale (5, 6) selon l'une des revendications 8 à 10, **caractérisée en ce que** l'élément d'actionnement (7), dans la position de verrouillage, peut être verrouillé avec l'élément de verrouillage (8) ou avec l'élément de levier (16).

12. Entretoise transversale (5, 6) selon la revendication 11, **caractérisée en ce que** l'élément d'actionnement (7) comporte un deuxième épaulement (27) qui, en la position de verrouillage, engage d'une manière verrouillant dans un creux de verrouillage (28) prévu sur l'élément de levier (16).

13. Entretoise transversale (6, 5) selon les revendications 6 et 8 et en particulier selon l'une des revendications 9 à 12, **caractérisée en ce que** sur son extrémité (31) qui peut être pivotée dehors sur le creux (10), l'élément d'actionnement (7) délimite avec le bord (32) du creux (10) une ouverture latérale (33) pour le passage de l'outil et **en ce que** l'élément de levier (16) comporte, sur son côté (34) qui est tourné vers l'ouverture en la position de verrouillage de l'élément de verrouillage (8), un logement (35) pour supporter l'outil passant à travers de l'ouverture.

14. Organe d'un dispositif de guidage de conduite qui peut être composé de plusieurs organes pivotants l'un par rapport à l'autre, ledit organe comportant deux pièces latérales opposées (3, 4) et une entretoise transversale (5, 6) selon l'une des revendications 1 à 13 reliant lesdites pièces latérales.

15. Organe selon la revendication 14, **caractérisée en ce que** la pièce latérale (3, 4) qui doit être reliée à l'entretoise transversale (5, 6) au moyen de verrouillage comporte une épaule (15) orientée vers l'intérieur et **en ce que** l'extrémité (9) à relier de l'entretoise transversale (5, 6) comporte un creux (10) ouvert vers l'intérieur dans lequel engage l'épaule (15), la face frontale tournée vers la pièce latérale (6, 5) de l'épaule (15) comportant un creux (23) dans lequel engage l'élément de verrouillage (8).
